# EUROPÄISCHE PATENTSCHRIFT

(11) **EP 3 317 503 B1**
(45) Veröffentlichungstag und Bekanntmachung des Hinweises auf die Patenterteilung: **25.01.2023**
(21) Anmeldenummer: 16740943.2
(22) Anmeldetag: 24.06.2016
(51) Int. Cl.: F02D 19/06, F02D 13/02, F02D 19/00, F02D 19/02, F02D 41/00

(54) **VERFAHREN ZUR REGELUNG EINER BRENNKRAFTMASCHINE**
METHOD FOR CONTROLLING AN ENGINE
PROCÉDÉ DE RÉGLAGE D'UN MOTEUR

(30) Priorität: 30.06.2015 AT 4162015
(43) Veröffentlichungstag der Anmeldung: 09.05.2018
(73) Patentinhaber: Innio Jenbacher GmbH & Co OG, 6200 Jenbach (AT)
(72) Erfinder: THALHAUSER, Josef, 83191 Nußdorf (DE); SPYRA, Nikolaus, 6020 Innsbruck (AT); MUSU, Ettore, 41051 Modena (IT)
(74) Vertreter: Torggler & Hofmann Patentanwälte - Innsbruck
(86) Internationale Anmeldenummer: PCT/AT2016/050232
(87) Internationale Veröffentlichungsnummer: WO 2017/000011

(56) Entgegenhaltungen:
- DE-A1- 2 802 279
- DE-A1-102004 016 260
- FR-A1- 2 804 475
- US-A- 4 192 265
- US-A- 5 947 076
- US-A1- 2005 072 400

## Beschreibung

Die vorliegende Erfindung betrifft ein Verfahren zur Regelung einer Brennkraftmaschine. Die Erfindung betrifft auch eine Brennkraftmaschine mit den Merkmalen des Oberbegriffs des Anspruchs 6.

Die DE 10 2012 021 778 A1 beschreibt ein Verfahren, bei welchem Ungleichstellungen zwischen verschiedenen Kolben-Zylinder-Einheiten einer Brennkraftmaschine durch Zylinderdrucksensoren erfasst und durch Anpassung der in die jeweiligen Vorkammern eingebrachten Mengen an Treibgas ausgeglichen werden. Weist ein Zylinder einer Kolben-Zylinder-Einheit einen zu niedrigen Liefergrad auf, so wird die der entsprechenden Vorkammer zugeführte Menge an Treibgas erhöht ("Überblasen" der Vorkammern). Es handelt sich also um eine Maßnahme zur Kompensation von Liefergradunterschieden zwischen unterschiedlichen Kolben-Zylinder-Einheiten. Die Vorkammer wird genutzt um die Verbrennung im Hauptbrennraum der entsprechenden Kolben-Zylinder-Einheit zu stützen. Eine Verstellung der Betätigungscharakteristik eines Einlass- und/oder Auslassventils der Kolben-Zylinder-Einheit ist gemäß diesem Verfahren nicht vorgesehen. Das Verfahren erfordert zur Erfassung eines zylinderspezifischen oder zylinderbankspezifischen Liefergrads Zylinderdruck- oder vergleichbare Sensoren. Ein weiteres aus dem Stand der Technik bekanntes Verfahren zum Regeln einer Brennkraftmaschine geht aus der US 2005/072400 A1 hervor.

Es ist bekannt, über einen variablen Ventiltrieb für die Kolben-Zylinder-Einheit eine Verstellung der Betätigungscharakteristik eines Einlass- und/oder Auslassventils der Kolben-Zylinder-Einheit vorzunehmen.

Grundsätzlich könnten solche variablen Ventiltriebe auch bei gattungsgemäßen Brennkraftmaschinen, welche ja Vorkammern aufweisen, eingesetzt werden. Dies ist aber aus dem Stand der Technik noch nicht bekannt.

Problematisch bei der Verwendung eines variablen Ventiltriebs bei Brennkraftmaschinen mit Vorkammer ist es, dass ein variabler Ventiltrieb die Dosierung des Vorkammergases beeinflusst.

Dadurch ändert sich das Verhältnis zwischen der dem Hauptbrennraum und der der Vorkammer zugeführten Energie, was ohne flankierende Maßnahmen zu einer suboptimalen Verbrennung in der Kolben-Zylinder-Einheit führt. Die Folgen sind ein ungünstiger Wirkungsgrad, erhöhte Schadstoffemissionen sowie gegebenenfalls erhöhte thermische Belastungen der Kolben-Zylinder-Einheit.

Aufgabe der Erfindung ist die Bereitstellung eines gattungsgemäßen Verfahrens und einer gattungsgemäßen Brennkraftmaschine, bei welchen die eingangs beschriebenen Probleme nicht auftreten.

Diese Aufgabe wird durch ein Verfahren mit den Merkmalen des Anspruchs 1 und eine Brennkraftmaschine mit den Merkmalen des Anspruchs 6 gelöst. Vorteilhafte Ausführungsformen der Erfindung sind in den abhängigen Ansprüchen definiert.

Gemäß der Erfindung ist also vorgesehen, dass die der Vorkammer separat zugeführte Menge an Treibgas an eine Verstellung der Betätigungscharakteristik eines Einlass- und/oder Auslassventils der Kolben-Zylinder-Einheit angepasst wird, wobei
- bei einer Verstellung der Betätigungscharakteristik derart, dass die Füllung der Kolben-Zylinder-Einheit verringert wird, die der Vorkammer zugeführte Menge an Treibgas verringert wird und/oder
- bei einer Verstellung der Betätigungscharakteristik derart, dass die Füllung der Kolben-Zylinder-Einheit erhöht wird, die der Vorkammer zugeführte Menge an Treibgas erhöht wird.

Bei einer Verstellung der Betätigungscharakteristik derart, dass die Füllung der Kolben-Zylinder-Einheit verringert wird, die der Vorkammer zugeführte Menge an Treibgas verringert wird. Auf diese Weise kann das Verhältnis der dem Hauptbrennraum und der Vorkammer zugeführten Energien konstant gehalten werden.

Bei einer Verstellung der Betätigungscharakteristik derart, dass die Füllung der Kolben-Zylinder-Einheit erhöht wird, die der Vorkammer zugeführte Menge an Treibgas erhöht wird. Dadurch gelingt es, das Verhältnis der dem Hauptbrennraum und der Vorkammer zugeführten Energien konstant zu halten.

Durch die Erfindung ist es möglich, unabhängig von der gewählten Betätigungscharakteristik der Einlassventile ein Verhältnis der durch die über das Vorkammergasventil zugeführten Energiemenge zu der der Kolben-Zylinder-Einheit über die Einlassventile zugeführten Energiemenge zumindest im Wesentlichen konstant zu halten, vorzugsweise so, dass ca. 1 % der Energiemenge über das Vorkammergasventil zugeführt wird und ca. 99 % der Energiemenge über die Einlassventile zugeführt wird.

Hierdurch wird erreicht, dass sich in der Vorkammer immer ein Gemisch von aus der Kolben-Zylinder-Einheit stammender Ladung und aus über das Vorkammergasventil zugeführtem Treibgas mit einem gewünschten Verhältnis von Luft zu Treibgas (Lambda-Wert) bildet. Dies ist einerseits für die Emissionskontrolle und andererseits zur Erzielung einer sicheren Verbrennung mit hohem Wirkungsgrad in der Kolben-Zylinder-Einheit wichtig.

Vorzugsweise wird diese Maßnahme derart durchgeführt, dass das Gemisch in der Vorkammer zum Zündzeitpunkt einen Lambda-Wert von ca. 1 oder 1,1 aufweist, wobei ein Lambda-Wert von 1 einem stöchiometrischen Verhältnis und ein Lambda-Wert größer 1 einem Luftüberschuss entspricht.

Es kann vorgesehen sein, das Verhältnis der dem Hauptbrennraum und der Vorkammer zugeführten Energiemengen an eine veränderte Betätigungscharakteristik eines Einlass- und/oder Auslassventils, beispielsweise Ventilsteuerzeiten, so anzupassen, dass bei "scharfen" Ventilsteuerzeiten (Ventilsteuerzeiten mit geringem Füllgrad der Kolben-Zylinder-Einheiten) der Energieanteil der Vorkammer zugunsten des Hauptbrennraums leicht verringert wird (beispielsweise auf unter 1 %, z. B. auf 0,7%, um beim obigen Zahlenbeispiel zu bleiben). Eine Betätigungscharakteristik mit geringem Füllgrad der Kolben-Zylinder-Einheiten bewirkt eine kühlere Ladung der Kolben-Zylinder-Einheiten. Dies erlaubt es - unter Beibehaltung von Emissionsvorgaben, beispielsweise NOx - mit fetterem Gemisch zu fahren, was wiederum geringeren Zündimpuls von der Vorkammer erfordert. Somit ist es in diesem Fall möglich, die der Vorkammer zugeführte Energie weiter abzusenken und die Vorkammer abzumagern. Die Erfindung benötigt kein Feedback aus der Verbrennung, es handelt sich also um ein reines "Feed-Forward" gesteuertes Steuerkonzept. Eine aufwendige Sensorik wie Zylinderdrucksensoren ist nicht erforderlich.

In der vorliegenden Offenbarung wird unter "Treibgas" sowohl reines Treibgas als auch ein Gemisch aus Treibgas und Luft verstanden. Mit anderen Worten kann die Vorkammer mit reinem Treibgas oder mit Gemisch gespült werden.

Erfolgt bei konstanter Soll-Leistung eine Verstellung der Betätigungscharakteristik der Einlassventile derart, dass die Füllung der Kolben-Zylinder-Einheit verringert wird, so versucht ein Leistungsregelkreis der Brennkraftmaschine durch Erhöhung des Ladedrucks die Füllung der Kolben-Zylinder-Einheit solange zu erhöhen, bis wieder dieselbe Energiemenge zugeführt wird. Der vor dem Vorkammergasventil herrschende Druck folgt in der Regel dem Ladedruck oder wird dem Ladedruck nachgeführt. Die der Vorkammer durch das Vorkammergasventil zugeführte Menge an Treibgas hängt vom Druckverlauf vor dem Vorkammergasventil - der dem Ladedruck nachgeführt wird - und vom Zylinderdruckverlauf der zugehörigen Kolben-Zylinder-Einheit ab.

Da der erstere wie beschrieben steigt und der letztere aufgrund der verringerten Temperatur der Ladung in der Kolben-Zylinder-Einheit allenfalls sinkt, würde bei einer Veränderung der Betätigungscharakteristik derart, dass die Füllung der Kolben-Zylinder-Einheit verringert wird der Vorkammer eine zu große Menge an Treibgas zugeführt werden.

Eine Steuereinrichtung greift ein und passt, z.B. über den vor dem Vorkammergasventil herrschenden Druck, die der Vorkammer zugeführte Menge an Treibgas so an, dass die Menge reduziert wird. Dasselbe gilt mutatis mutandis im Falle einer Erhöhung der Füllung der Kolben-Zylinder-Einheit.

Eine Verstellung der Betätigungscharakteristik kann beispielsweise so erfolgen, dass mittels eines variablen Ventiltriebs die Öffnungsdauer des entsprechenden Ventils und/oder der Öffnungs- oder Schließzeitpunkt des entsprechenden Ventils und/oder die Ventilerhebungskurve (bei einem vollvariablen variablen Ventiltrieb) verändert werden. Einfache variable Ventiltriebe können nach dem Stand der Technik so ausgestaltet sein, dass durch zwei verschiedene Nockenwellenprofile zwei diskrete Ventilerhebungskurven für das Ventil wahlweise aktivierbar sind.

Eine Möglichkeit der Beeinflussung der über das Vorkammergasventil zugeführten Treibgasmenge besteht über ein aktives Vorkammergasventil. Ein aktives Vorkammergasventil erlaubt im Gegensatz zu einem passiven Ventil, das lediglich über einen Differenzdruck aktiviert wird, eine Anpassung der Öffnungsdauer unabhängig vom am Vorkammergasventil anliegenden Druck.

Eine alternative Möglichkeit besteht im Einsatz einer aktiven Blende, welche stromaufwärts eines passiven Vorkammergasventils angeordnet ist. Eine aktive Blende weist eine einstellbare freie Querschnittsfläche (Einstellen eines Öffnungsgrades) auf. Somit lässt sich die der Vorkammer zugeführte Menge an Treibgas bei unverändertem Differenzdruck zwischen Ladedruck und Vorkammergasversorgungsdruck vor der aktiven Blende variieren.

Alternativ oder zusätzlich zu diesen beiden Maßnahmen kann natürlich auch der vor dem Vorkammergasventil anliegende Druck mittels eines aktiv beeinflussbaren Druckreglers verändert werden, um den Differenzdruck über das Vorkammergasventil konstant zu halten, wodurch die gewünschte Anpassung der Vorkammergasmenge erzielt wird.

Steigt bei konstantem Ladedruck z. B. der Druck im Hauptbrennraum durch eine Änderung der Betätigungscharakteristik der Einlassventile hin zu einer höheren Füllung des Hauptbrennraums, muss der am Vorkammergasventil anliegende Druck entsprechend erhöht werden, um den Differenzdruck über das Vorkammergasventil anzupassen, sodass das Verhältnis der über das Vorkammergasventil zugeführte Energiemenge und der über die Einlassventile zugeführten Energiemengen konstant bleibt. In anderen Worten wird hier der geänderte Liefergrad berücksichtigt.

Eine noch genauere Anpassung der Menge an der Vorkammer zugeführtem Treibgas kann dadurch erfolgen, dass zusätzlich der Ladedruck berücksichtigt wird, derart dass bei einem höheren Ladedruck die Differenz zwischen dem Druck vor dem Vorkammergasventil und dem Druck im Hauptbrennraum nicht konstant gehalten wird, sondern die Differenz vergrößert wird, indem der Druck vor dem Vorkammergasventil erhöht wird. Ziel dieser Maßnahme ist es, das Verhältnis der über das Vorkammergasventil zugeführten Energie und der Energie im Hauptbrennraum konstant zu halten.

Der Liefergrad und die Dichte des Gemisches (damit auch die Masse im Zylinder) werden auch durch eine geänderte Gemischtemperatur beeinflusst. Es kann also vorgesehen sein, auch eine geänderte Gemischtemperatur durch die oben beschriebene Maßnahme zu kompensieren.

Bei Verwendung eines oben beschriebenen aktiven Vorkammergasventils kann eine Öffnungszeit des Vorkammergasventils verlängert oder verkürzt werden und eine Anpassung des vor dem Vorkammergasventil herrschenden Druckes ist nicht unbedingt erforderlich. Es kann aber natürlich auch hier eine Berücksichtigung eines höheren Ladedrucks durch entsprechende Öffnungszeit des Vorkammergasventils erfolgen.

Die hier beschriebene Steuereinrichtung kann als Steuerkreis einer Regeleinrichtung der Brennkraftmaschine ausgebildet sein.

Vorzugweise weist die Brennkraftmaschine eine Vielzahl von Kolben-Zylinder-Einheiten auf, denen jeweils eigene Vorkammern zugeordnet sind, wobei die Steuereinrichtung in Bezug auf jedes Paar von Kolben-Zylinder-Einheit und Vorkammer nach einer der vorbeschriebenen Ausführungsformen vorgeht.

Zur Veränderung der Betätigungscharakteristik wenigstens eines Einlass- und/oder Auslassventils weist die Brennkraftmaschine bevorzugt einen variablen Ventiltrieb (abgekürzt VVT) auf.

Vorzugsweise ist die Brennkraftmaschine als stationärer Gasmotor, insbesondere koppelbar oder gekoppelt mit einem Generator zur Stromerzeugung ausgebildet.

Die Erfindung wird anhand der Figuren diskutiert. Es zeigen:
- Fig. 1: eine schematische Darstellung einer erfindungsgemäßen Brennkraftmaschine
- Fig. 2: ein Regelschema gemäß einem Ausführungsbeispiel der Erfindung
- Fig. 3: ein Diagramm des am Vorkammergasventil anliegenden Gasdruckes

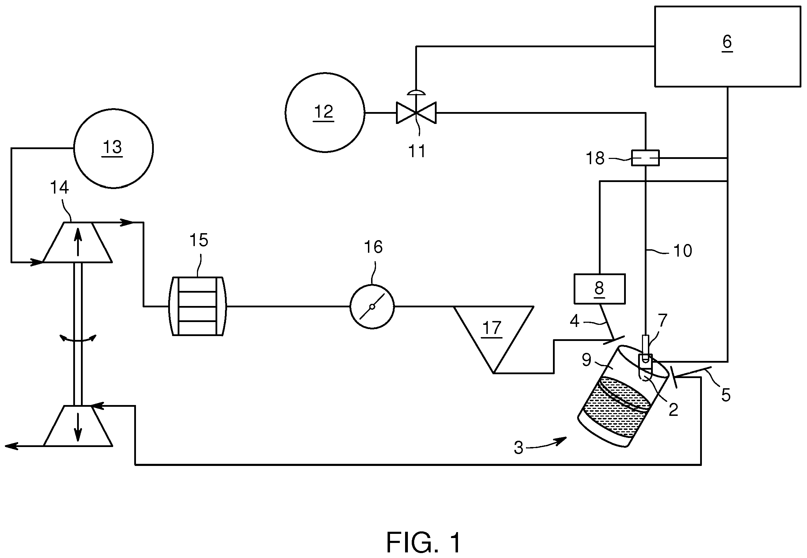

Fig. 1 zeigt eine Brennkraftmaschine 1 mit mehreren Kolben-Zylinder-Einheiten 3 (von denen nur eine exemplarisch dargestellt ist). Die Kolben-Zylinder-Einheit 3 wird über Einlassventile 4 (dargestellt ist nur eines) mit Treibgas versorgt. Abgase werden über Auslassventile 5 (dargestellt ist nur eines) abgeführt. Weiters ist eine Vorkammer 2 vorgesehen, die über Überströmöffnungen mit einem Hauptbrennraum 9 der Kolben-Zylinder-Einheit in Verbindung steht. Die Vorkammer 2 wird über ein hier aktiv ausgebildetes Vorkammergasventil 7 mit Treibgas (entweder mit reinem Treibgas oder Gemisch) versorgt.

In diesem Ausführungsbeispiel kann die Betätigungscharakteristik der Einlassventile 4 über einen variablen Ventiltrieb 8 variiert werden. Nicht dargestellt ist eine grundsätzlich auch (alternativ oder zusätzlich) mögliche Variation der Betätigungscharakteristik der Auslassventile 5. Der variable Ventiltrieb 8 steht mit einer Steuereinrichtung 6 der Brennkraftmaschine 1 in Signalverbindung und wird von dieser gesteuert. Auch das in diesem Fall aktive Vorkammergasventil 7 steht mit der Steuereinrichtung 6 in Signalverbindung und wird von dieser gesteuert.

In der Vorkammergasversorgung 10 ist ein Druckregler 11 angeordnet, das mit der Steuereinrichtung 6 in Signalverbindung steht und von dieser gesteuert wird. Das eröffnet die Möglichkeit, den am Vorkammergasventil 7 anliegenden Druck zu variieren. Treibgas wird der Vorkammer 2 aus einer Treibgasquelle für die Vorkammer 12 über die Vorkammergasversorgung 10, dem Druckregler 11 und dem Vorkammergasventil 7 zugeführt.

Treibgas wird dem Hauptbrennraum 9 aus einer Treibgasquelle für den Hauptbrennraum 13, einem Verdichter 14, einem Gemischkühler 15, einer Drossel 16, einem Einlasskanal 17 und den Einlassventilen 4 zugeführt.

Die dem Hauptbrennraum 9 zugeführte Menge an Treibgas kann über den variablen Ventiltrieb 8 verändert werden. Die der Vorkammer 2 zugeführte Menge an Treibgas kann über das Vorkammergasventil 7 und/oder den Druckregler 11 und/oder die variable Blende 18 angepasst werden.

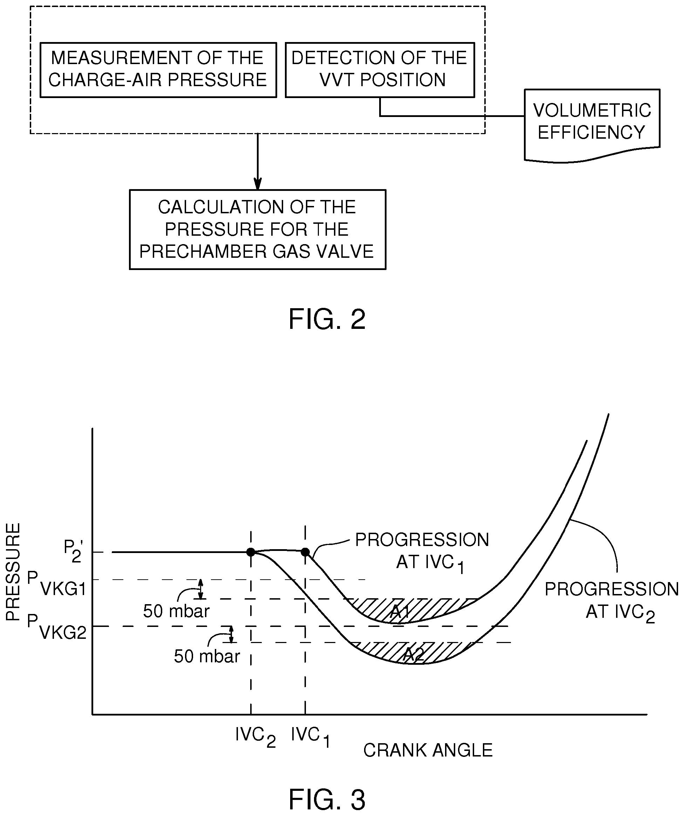

Fig. 2 zeigt ein Regelschema gemäß einem ersten Ausführungsbeispiel der Erfindung, bei welchem in einem ersten Schritt der im Einlasskanal 17 herrschende und am Einlassventil 4 anliegende Ladedruck p₂' gemessen wird. Aus der Betätigungscharakteristik des variablen Ventiltriebs 8 (im Diagramm: "Erfassen der WT-Stellung") wird durch die Steuereinrichtung 6 ein Liefergrad bestimmt. Aus dem Ladedruck p₂' und dem Liefergrad wird jener Druck berechnet, der für die Zumessung der entsprechenden Menge an Treibgas für die Vorkammer 2 erforderlich ist.

Figur 3 zeigt ein Diagramm des Druckes im Hauptbrennraum 9 (Zylinderdruck) im Einlasstakt für zwei verschiedene Betätigungscharakteristika IVC₁ und IVC₂ (von engl. *inlet valve closing*) eines Einlassventils 4 über den Kurbelwinkel aufgetragen.

Ebenfalls eingezeichnet sind zwei verschiedene Druckniveaus p_{VKG1} und p_{VKG2} des in der Vorkammergasversorgung 10 anliegenden Druckes vor dem Vorkammergasventil 7. Das Niveau dieses in der Vorkammergasversorgung 10 vor dem Vorkammergasventil 7 anliegenden Druckes lässt sich durch Betätigung des Druckreglers 11 verändern.

Maßgeblich für die tatsächlich in die Vorkammer 2 zugeführte Menge an Treibgas ist der über das Vorkammergasventil 7 herrschende Differenzdruck zwischen Zylinderdruck und dem Druck (p_{VKG1} bzw. p_{VKG2}) in der Vorkammergasversorgung 10 vor dem Vorkammergasventil 7.

Häufig sind Vorkammergasventile 7 als passive Ventile (Rückschlagventile, engl. *check valves*) ausgeführt, die bei einem bestimmten positiven Differenzdruck öffnen und damit Treibgas in die Vorkammer 2 einlassen. Mit "positivem" Differenzdruck ist gemeint, dass der Druck vor dem Vorkammergasventil 7 größer ist als in der Vorkammer 2 bzw. im Hauptbrennraum 9. Ein üblicher Wert (und für dieses Beispiel gewählt) für einen zur Öffnung eines passiven Vorkammergasventils erforderlichen Differenzdruck ist 50 mbar.

Wird nun ein Einlassventil-Schließen in der Einlassphase nach früh verschoben (d.h. das Einlassventil 4 schließt bei einem größeren Kurbelwinkel vor dem unteren Totpunkt in der Darstellung von IVC₁ auf IVC₂) sinkt der Zylinderdruck ausgehend vom Ladedruck p₂' im Hauptbrennraum 9 stärker ab (Verlauf bei IVC₂) als bei einem späteren Einlassventil-Schließen (Verlauf bei IVC₁). Dies hat normalerweise zur Folge, dass die Periode, in welcher der Differenzdruck vor Vorkammergasventil 7 und Vorkammer 2 größer gleich dem für die Betätigung des Vorkammergasventils 7 notwendige Differenzdruck ist, gegenüber einem späteren Einlassventil-Schließen verlängert ist. Dadurch gelangt mehr Treibgas in die Vorkammer 2.

Erfindungsgemäß kann nun die der veränderten Betätigungscharakteristik eines Einlass- oder Auslassventils geschuldeten veränderte Menge an der Vorkammer 2 zugeführtem Treibgas kompensiert werden. Im vorliegenden Ausführungsbeispiel erfolgt die Kompensation durch Senken des Druckniveaus p_{VKG1} auf p_{VKC2} in der Vorkammergasversorgung 10 vor dem Vorkammergasventil 7 durch Betätigung des Druckreglers 11.

Die schraffierte Fläche A1 entspricht der Menge an Vorkammergas bei der dem Druckverlauf bei IVC₁ und dem Druckniveau p_{VKG1}. Die schraffierte Fläche A2 entspricht der Menge an Vorkammergas bei dem Druckverlauf bei IVC₂ und dem Druckniveau p_{VKG2}. Durch die Erfindung kann die Menge A2 der Menge A1 gleichgestellt werden.

Durch das gesenkte Druckniveau wird das Verhältnis der über das Vorkammergasventil 7 eingebrachten Energie und der über die Einlassventile 4 eingebrachte Energie konstant gehalten oder, wenn erwünscht, sogar verringert. Würde bei der Betätigungscharakteristik IVC₂ das Druckniveau p_{VKG1} beibehalten werden, ergäbe sich eine zu große Vorkammergasmenge.

Alternativ oder zusätzlich kann vorgesehen sein, dass das Druckniveau vor dem Vorkammergasventil 7 durch eine Blende 18 eingestellt wird. In diesem Fall lässt sich die der Vorkammer 2 zugeführte Menge an Treibgas bei unverändertem Differenzdruck zwischen dem Ausgang des Druckreglers 11 und der Vorkammer 2 variieren. Das erfordert eine aktive Blende 18. Diese steht in Signalverbindung mit der Steuereinrichtung 6.

Bei Vorhandensein eines aktiven (also regelbaren) Vorkammergasventils 7 lässt sich das Verhältnis der über das Vorkammergasventil 7 eingebrachten Energie und der über die Einlassventile 4 eingebrachte Energie durch eine veränderte Öffnungsdauer des Vorkammergasventils 7 konstant halten.

### Bezugszeichenliste:

- 1: Brennkraftmaschine
- 2: Vorkammer
- 3: Kolben-Zylinder-Einheit
- 4: Einlassventil
- 5: Auslassventil
- 6: Steuereinrichtung
- 7: Vorkammergasventil
- 8: variabler Ventiltrieb
- 9: Hauptbrennraum
- 10: Vorkammergasversorgung
- 11: Druckregler
- 12: Treibgasquelle für Vorkammer
- 13: Treibgasquelle für Hauptbrennraum
- 14: Verdichter
- 15: Gemischkühler
- 16: Drossel
- 17: Einlasskanal
- 18: Blende
- p₂': Ladedruck
- p_{VKG1}, p_{VKG2}: Vorkammergasversorgungsdrücke
- IVC₁ und IVC₂: Einlassventil-Schließzeiten

## Patentansprüche

1. Verfahren zur Regelung einer Brennkraftmaschine (1), wobei bei einer mit einer Vorkammer (2) versehenen Kolben-Zylinder-Einheit (3) die separat der Vorkammer (2) zugeführte Menge an Treibgas an eine Verstellung der Betätigungscharakteristik eines Einlass- und/oder Auslassventils (4, 5) der Kolben-Zylinder-Einheit (3) angepasst wird, **dadurch gekennzeichnet, dass**
a. bei einer Verstellung der Betätigungscharakteristik derart, dass die Füllung der Kolben-Zylinder-Einheit (3) verringert wird, die der Vorkammer (2) zugeführte Menge an Treibgas verringert wird, und/oder
b. bei einer Verstellung der Betätigungscharakteristik derart, dass die Füllung der Kolben-Zylinder-Einheit (3) erhöht wird, die der Vorkammer (2) zugeführte Menge an Treibgas erhöht wird.

2. Verfahren nach Anspruch 1, wobei die Anpassung der der Vorkammer (2) zugeführten Menge an Treibgas zusätzlich unter Berücksichtigung eines Ladedruckes (p₂') der Brennkraftmaschine (1) erfolgt.

3. Verfahren nach wenigstens einem der vorangehenden Ansprüche, wobei die der Vorkammer (2) zugeführte Menge an Treibgas durch Einstellen einer Öffnungsdauer eines Vorkammergasventils (7) angepasst wird.

4. Verfahren nach wenigstens einem der vorangehenden Ansprüche, wobei die der Vorkammer (2) zugeführte Menge an Treibgas durch Einstellen eines Öffnungsgrades einer Blende (18) angepasst wird.

5. Verfahren nach wenigstens einem der vorangehenden Ansprüche, wobei die der Vorkammer (2) zugeführte Menge an Treibgas durch Einstellen eines am Vorkammergasventil (7) anliegenden Druckes mittels eines Druckreglers (11) angepasst wird.

6. Brennkraftmaschine (1) mit wenigstens einer Steuereinrichtung (6) und einer mit einer Vorkammer (2) versehenen Kolben-Zylinder-Einheit (3), wobei separat der Vorkammer (2) über ein Vorkammergasventil (7) Treibgas zuführbar ist und wobei ein variabler Ventiltrieb (8) für die Kolben-Zylinder-Einheit (3) zur Verstellung der Betätigungscharakteristik eines Einlass- und/oder Auslassventils (4, 5) der Kolben-Zylinder-Einheit (3) vorgesehen ist, **dadurch gekennzeichnet, dass** die Steuereinrichtung (6) die der Vorkammer (2) zugeführte Menge an Treibgas an eine durch den variablen Ventiltrieb (8) vorgenommene Verstellung der Betätigungscharakteristik des Einlass- und/oder Auslassventils (4, 5) der Kolben-Zylinder-Einheit (3) anpasst nach dem Verfahren nach einem der Ansprüche 1 bis 5.

## Claims

1. A method for controlling an internal combustion engine (1) wherein, in a piston-cylinder unit (3) provided with a precombustion chamber (2), the quantity of propellant gas supplied separately to the precombustion chamber (2) is adapted in order to adjust the operating characteristics of an inlet and/or outlet valve (4, 5) of the piston-cylinder unit (3), **characterized in that**
a. when adjusting the operating characteristics in a manner such that filling of the piston-cylinder unit (3) is reduced, the quantity of propellant gas supplied to the precombustion chamber (2) is reduced, and/or
b. when adjusting the operating characteristics in a manner such that filling of the piston-cylinder unit (3) is increased, the quantity of propellant gas supplied to the precombustion chamber (2) is increased.

2. The method according to claim 1, wherein the adaptation of the quantity of propellant gas supplied to precombustion chamber (2) additionally takes a boost pressure (p₂') of the internal combustion engine (1) into consideration.

3. The method according to at least one of the preceding claims, wherein the quantity of propellant gas supplied to the precombustion chamber (2) is adjusted by setting an opening duration for a precombustion chamber gas valve (7) .

4. The method according to at least one of the preceding claims, wherein the quantity of propellant gas supplied to the precombustion chamber (2) is adjusted by setting a degree of opening of an aperture (18).

5. The method according to at least one of the preceding claims, wherein the quantity of propellant gas supplied to the precombustion chamber (2) is adjusted by setting a pressure applied to the precombustion chamber gas valve (7) by means of a pressure regulator (11).

6. An internal combustion engine (1) with at least one control device (6) and a piston-cylinder unit (3) provided with a precombustion chamber (2), wherein the precombustion chamber (2) can be separately supplied with propellant gas via a precombustion chamber gas valve (7) and wherein a variable valve train (8) is provided for the piston-cylinder unit (3) for adjusting the operating characteristics of an inlet valve and/or outlet valve (4, 5) of the piston-cylinder unit (3), **characterized in that** the control device (6) adapts the quantity of propellant gas supplied to the precombustion chamber (2) to an adjustment of the operating characteristics of the inlet valve and/or outlet valve (4, 5) of the piston-cylinder unit (3) undertaken by the variable valve train (8) in accordance with the method according to one of claims 1 to 5.

## Revendications

1. Procédé de régulation d'un moteur à combustion interne (1), dans lequel pour une unité à pistons et cylindres (3) pourvue d'une préchambre (2), la quantité de gaz propulseur fournie séparément à la préchambre (2) est adaptée à un réglage de la caractéristique d'actionnement d'une soupape d'admission et/ou d'échappement (4, 5) de l'unité à pistons et cylindres (3), **caractérisé en ce que**
a. pour un réglage de la caractéristique d'actionnement de telle manière que le remplissage de l'unité à pistons et cylindres (3) soit réduit, la quantité de gaz propulseur fournie à la préchambre (2) est réduite, et/ou
b. pour un réglage de la caractéristique d'actionnement de telle manière que le remplissage de l'unité à pistons et cylindres (3) soit augmenté, la quantité de gaz propulseur fournie à la préchambre (2) est augmentée.

2. Procédé selon la revendication 1, dans lequel l'adaptation de la quantité de gaz propulseur fournie à la préchambre (2) est en outre effectuée en tenant compte d'une pression de charge (p2') du moteur à combustion interne (1).

3. Procédé selon au moins l'une quelconque des revendications précédentes, dans lequel la quantité de gaz propulseur fournie à la préchambre (2) est adaptée par réglage d'une durée d'ouverture d'une soupape de gaz de préchambre (7).

4. Procédé selon au moins l'une quelconque des revendications précédentes, dans lequel la quantité de gaz propulseur fournie à la préchambre (2) est adaptée par réglage d'un degré d'ouverture d'un diaphragme (18).

5. Procédé selon au moins l'une quelconque des revendications précédentes, dans lequel la quantité de gaz propulseur fournie à la préchambre (2) est adaptée par réglage d'une pression appliquée à la soupape de gaz de préchambre (7) au moyen d'un régulateur de pression (11).

6. Moteur à combustion interne (1) avec au moins un dispositif de commande (6) et une unité à pistons et cylindres (3) pourvue d'une préchambre (2), dans lequel du gaz propulseur peut être fourni séparément à la préchambre (2) par le biais d'une soupape de gaz de préchambre (7) et dans lequel une commande de soupape (8) variable est prévue pour l'unité à pistons et cylindres (3) pour le réglage de la caractéristique d'actionnement d'une soupape d'admission et/ou d'échappement (4, 5) de l'unité à pistons et cylindres (3), **caractérisé en ce que** le dispositif de commande (6) adapte la quantité de gaz propulseur fournie à la préchambre (2) à un réglage entrepris par la commande de soupape (8) variable de la caractéristique d'actionnement de la soupape d'admission et/ou d'échappement (4, 5) de l'unité à pistons et cylindres (3) selon le procédé selon l'une quelconque des revendications 1 à 5.
